# EUROPEAN PATENT SPECIFICATION

(11) **EP 3 768 953 B1**
(45) Date of publication and mention of the grant of the patent: **04.01.2023**
(21) Application number: 19770940.5
(22) Date of filing: 19.03.2019
(51) Int. Cl.: F01K 23/10, F01K 13/02, F01N 5/02, F01P 11/02, F02G 5/02, F25B 30/02, F25B 41/00

(54) **AN ARRANGEMENT AND A METHOD FOR CONTROLLING A SHUTDOWN PHASE OF A WHR-SYSTEM**
ANORDNUNG UND VERFAHREN ZUR STEUERUNG EINER ABSCHALTPHASE EINES WHR-SYSTEMS
AGENCEMENT ET PROCÉDÉ DE COMMANDE D'UNE PHASE D'ARRET D'UN SYSTÈME WHR

(30) Priority: 19.03.2018 SE 1850301
(43) Date of publication of application: 27.01.2021
(73) Proprietor: Scania CV AB, 151 87 Södertälje (SE)
(72) Inventor: SEDERHOLM, Thomas, 137 68 Jordbro (SE); KARDOS, Zoltan, 151 35 Södertälje (SE)
(74) Representative: Scania CV AB
(86) International application number: PCT/SE2019/050242
(87) International publication number: WO 2019/182498

(56) References cited:
- WO-A1-2012/125107
- WO-A1-2015/197086
- WO-A1-2015/197090
- WO-A1-2017/087211
- US-A1- 2017 089 222

## Description

### BACKGROUND OF THE INVENTION AND PRIOR ART

The present invention relates to an arrangement and a method for controlling a shutdown phase of a WHR system according to the preamble of claims 1 and 9.

A WHR system (Waste Heat Recovery System) can be used in vehicles for recovering waste thermal energy and convert it to mechanical energy or electric energy. A WHR system includes a pump, which pressurizes and circulates a working fluid in a closed circuit. The circuit comprises one or several evaporators where the working fluid is heated and evaporated by one or several heat sources such as, for example, the exhaust gases from a combustion engine. The pressurized and heated vapor working fluid is directed to an expander where it expands. The expander generates mechanical energy, which can be used to operate the vehicle or apparatuses on the vehicle. Alternatively, the expander is connected to a generator generating electric energy. The working fluid leaving the expander is directed to a condenser. The working fluid is cooled in the condenser to a temperature at which it condenses. Conventional WHR systems comprise a compensation tank for volume compensation and pressure control of the working fluid. Such a compensation tank may be designed with an outer rigid tank and an inner rubber bladder receiving liquid working fluid. The volume of the rubber bladder and thus the volume of the working fluid in the WHR system may be changed by applying a varied compressed air pressure on the outside of the rubber bladder in the rigid tank.

During regular operation of the WHR system, the working fluid is in liquid state and gaseous state in different parts of the WHR system. In case the operation of the WHR system is abruptly stopped, it is a risk that isolated spaces are formed filled with gaseous working fluid especially in positions adjacent to the expander. During a following inactive period of the WHR system, ambient air cools the gaseous working fluid in said isolated spaces to a temperature at which the working fluid condenses. Since liquid requires less space than gas, the pressure in such isolated spaces may drop to a lower level than ambient air pressure. In such a case, it is a risk that ambient air penetrates into the circuit.

In order to address this problem, it is known to use a shutdown strategy in which the pump circulates the working fluid a period of time after the ignition in the vehicle has been turned off. In this case, the pump runs until all gaseous working fluid in the WHR system has condensed. In case, the ignition is turned off when the working fluid has a very high temperature, the pump has to circulate the working fluid a relatively long period of time before gaseous working fluid has been condensed.

US 2017/089222 A1 and WO 2015/197090 A1 both discloses WHR systems comprising a main circuit and a compensation tank, wherein the compensation tank is connected to the main circuit via one single connection line.

### SUMMARY OF THE INVENTION

The object of the present invention is to provide an arrangement and a method making it possible to provide a fast shutdown phase of a WHR system at which the risk that the pressure in the WHR system drops to a lower level than ambient pressure during a following inactive period is substantially eliminated.

The above mentioned object is achieved by the arrangement defined in claim 1. The pressure drop in a WHR system is mainly provided when remaining gaseous working fluid from an active period of the WHR system is condensed to liquid during a following inactive period of the WHR system. Except during a start-up phase of the WHR system, the working fluid flow between the compensation tank and the main circuit is relatively small. The working fluid in the compensation tank is cooled by ambient air and the working fluid in the main circuit is heated by exhaust gases. In view of this fact, the working medium in the compensation tank has usually a significantly lower temperature than the working fluid in the main circuit. When the control unit receives information indicating that the WHR system is to shutdown, it initiates activation of flow means which supply cool working fluid flow from the compensation tank to the main circuit. The shutdown phase of the WHR system may be trigged when the ignition is turned off in a vehicle. However, the shutdown phase may also be trigged by other kinds of information indicating that the WHR system is to shutdown. The supply of cool liquid working fluid to the main circuit results in a fast cooling of the working fluid in the main circuit to a temperature at which all working fluid is in liquid state. Such an active cooling of the working fluid in the main circuit results in an essentially faster cooling than a corresponding conventional passive cooling of the working fluid in the main circuit by ambient air.

According to the invention, said flow means comprises a flow member arranged to circulate the working fluid in the main circuit during at least a part of the shutdown phase. Such a working fluid flow makes it possible to transport and distribute and mix hot gaseous working fluid with liquid working fluid in different position in the main circuit. Furthermore, it is possible to direct hot working medium from the main circuit to the compensation tank where it will be cooled by existing cool working fluid. The flow member is the pump in the WHR system. By disconnecting the expander from a drive train of the vehicle or directing the working fluid past the expander via a bypass line in the main circuit, it is possible to circulate the working fluid by the pump through the main circuit with a relatively low flow resistance. However, it is also possible to use a separate flow member for circulating working fluid through the main circuit during the shutdown process.

According to the invention, said flow means comprises a first connection line and a second connection line which are arranged in different position between the compensation tank and the main circuit, and a valve device configured to direct the working fluid flow from the compensation tank to the main circuit via the first connection line and from the main circuit to the compensation tank via the second connection line. Such a design makes it possible to replace substantially all working fluid in the main line with working fluid from the compensation tank by circulating the working fluid once round the main circuit. In this case, it is possible to drop the temperature of the working fluid in the main circuit in a very fast manner.

According to an embodiment of the invention, said flow means comprises a pressure member arranged to provide a pressure difference between the working fluid in the compensation tank and the working fluid in the main circuit during at least a part of the shutdown phase. By providing a higher pressure in the compensation tank than in the main circuit, it is possible to provide a cool working fluid flow from the compensation tank to the main circuit. By providing a lower pressure in the compensation tank than in the main circuit, it is possible to provide a hot working fluid flow from the main circuit to the compensation tank. Said pressure member may be arranged to change the pressure in the compensation tank. Many compensation tank comprises an existing pressure regulation device by which it is possible to adjust the pressure of the working fluid in the compensation tank. Alternatively or in combination said pressure member may be arranged to change the pressure in the main circuit. Such a pressure member may be a cylinder having a space in fluid contact with the main circuit. The volume of the space may be adjusted by a piston which is moved to different position in the cylinder by an actuator. The activation of such pressure members may be perform as a compliment to the circulation of the working fluid by the pump during the shutdown phase.

According to an embodiment of the invention, the control unit is configured to receive information indicating when all working fluid in the main circuit is in liquid state. When all working liquid is in liquid state, a following cooling of the working fluid in the main circuit does only slightly decrease the pressure. Thus, when the control unit receives information indicating that all working fluid is in liquid state, it is possible to end the shutdown phase of the WHR system. The control unit may be configured to receive information about the temperature and the pressure of the working fluid in a position adjacent to the expander. This information indicates if the working fluid is in gaseous or liquid state. It is a risk that closed spaces with gaseous working fluid are formed in specific positions during a shutdown phase of a WHR system. In case the pressure and temperature indicates that the working fluid in such specific positions of the main circuit is in liquid state, it is very likely that the working fluid is in liquid state in all parts of the main circuit.

According to an embodiment of the invention, the arrangement comprises cooling means arranged to cool the working liquid in the compensation tank. Such a design makes it possible to further decrease the temperature of the working fluid in the compensation tank and further increase the capacity to cool the working fluid in the main circuit during the shutdown phase of the WHR system. Said cooling means may comprise cooling fins arranged on an outer surface of the compensation tank. In this case, it is possible to cool the working fluid in the compensation tank to a temperature in the vicinity of ambient air temperature. In order to further increase the cooling capacity of the working fluid in the compensation tank, it is possible to use an air fan directing an ambient air flow towards an area of the compensation tank comprising the cooling fins.

The above mentioned object is also achieved by the method defined in claim 9.

### BRIEF DESCRIPTION OF THE DRAWINGS

In the following a preferred embodiments of the invention are described, as examples, with reference to the attached drawings, on which:
Fig. 1 shows a WHR system in a vehicle,
Fig. 2 shows an example of an arrangement for controlling a shutdown phase of the WHR system,
Fig. 3 shows an embodiment of an arrangement for controlling the shutdown phase of the WHR system according to the invention and
Fig. 4 shows a flow chart illustrating a method for controlling the shutdown phase of the WHR system.

### DETAILED DESCRIPTION OF PREFERRED EMBODIMENTS OF THE INVENTION

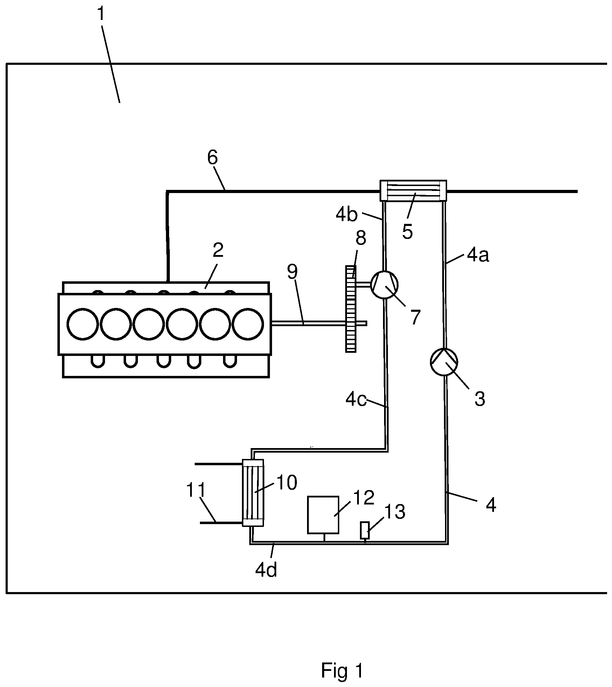

Fig. 1 shows a schematically disclosed vehicle 1 powered by a combustion engine 2.

The vehicle 1 may be a heavy vehicle and the combustion engine 2 may be a diesel engine. The vehicle is provided with a WHR-system (Waste Heat Recovery system). The WHR- system comprises a pump 3, which pressurizes and circulates a working fluid in a main circuit 4 of the WHR system. In this case, the working fluid is ethanol. However, it is possible to use other kinds of working fluids such as for example R245fa. The pump 3 directs the working fluid to an evaporator 5 via a first part 4a of the main circuit 4. The working fluid is in liquid state and it has a high pressure in the first part 4a of the main circuit 4. The working fluid is heated in the evaporator 5 to a temperature at which it evaporates by exhaust gases circulating in an exhaust line 6 from the combustion engine 2. The working fluid leaving the evaporator 5 is directed to an expander 7 via a second part 4b of the main line 4. In the second part 4b of the main circuit 4, the working fluid is in gaseous state and it has a high pressure and its highest temperature.

The pressurized and heated working fluid is expanded in the expander 7. The expander 7 may be a turbine or a piston. The expander 7 generates a rotary motion, which is transmitted, via a suitable mechanical transmission 8, to a shaft 9 of the power train of the vehicle 1. Alternatively, the expander 7 may be connected to a generator transforming mechanical energy into electrical energy which may be stored in a battery. After the working fluid has passed through the expander 7, it is directed to a condenser 10 via a third part 4c of the main circuit 4. In the third part 4c of the main circuit 4, the working fluid is in gaseous state and it has a low pressure. The gaseous working fluid is cooled in the condenser 10 by coolant circulating in a cooling system 11 to a temperature at which it condenses. The liquid working fluid is sucked from the condenser 10 to the pump 3 via a fourth part 4d of the main circuit 4. In the fourth part 4d of the main circuit 4, the working fluid is in liquid state and it has a low pressure. The WHR system comprises a compensation tank 12 and pressure member 13 for volume compensation and pressure control of the working fluid in the main circuit 4. The compensation tank 12 and pressure member 13 are connected to the fourth part 4d of the main circuit 4.

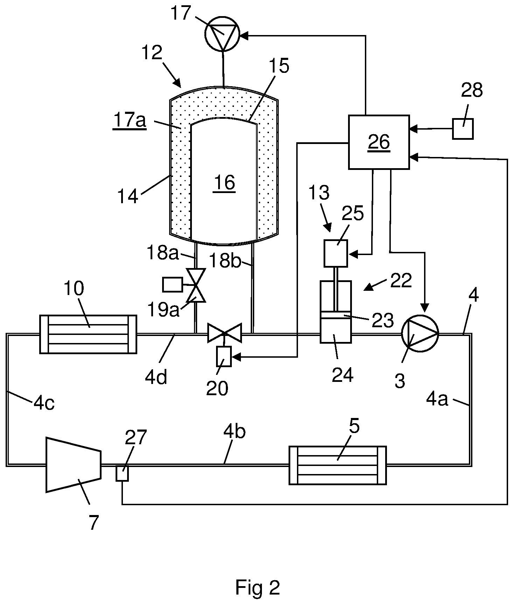

Fig. 2 shows the compensation tank 12 and the pressure member 13 of the WHR system more in detail. In this case, the compensation tank 12 comprises a rigid tank 14 enclosing a flexible body 15, which may be a rubber bladder. The flexible body 15 defines an inner space 16 of an adjustable volume for accommodation of working fluid. A schematically indicated air regulating device 17 is used to regulate the pressure in an air space 17a located on the outside of the flexible body 15 in the rigid tank 14. The volume of the inner space 16 depends on the pressure in the air space 17a. The inner space 16 is connected to the main circuit 4 via a first connection line 18a and a second connection line 18b arranged in a position downstream of the first connection line 18a. The first connection line 18a comprises a first valve member 19a. An intermittent valve member 20 is arranged in the main circuit 4 in a position between the connection points of the first connection line 18a and the second connection line 18b. The valve members 19a, 20 are comprised in a valve device controlling the working fluid flow between the compensation tank 12 and the main circuit 4.

The pressure member 13 comprises a piston 23, which is movably arranged into a cylinder 22. The cylinder 22 and the movable piston 23 defines a space 24 of an adjustable volume connected to the main circuit 4. An actuator 25 is used to provide movements of the piston 23. The actuator 25 may be a hydraulic or pneumatic activated power member or an electric motor. A control unit 26 control the movements of the actuator 25. The control unit 26 receives information from a sensor 27 sensing the temperature and the pressure of the working fluid in a position adjacent to the expander 7. The control unit 26 also receives information from an ignition system 28 of the vehicle 1 indicating when the ignition of the combustion engine 2 is turned off.

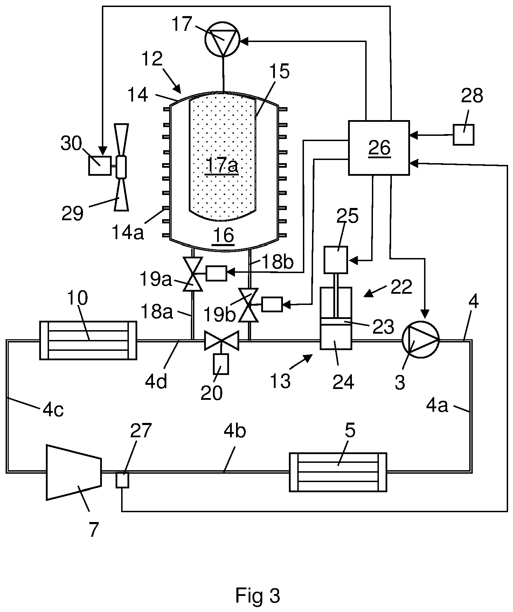

Fig. 3 shows an embodiment according to the invention. In this case, the second connection line 18b has also been provided with a second valve member 19b. Further, the compensation tank 12 has an alternative design. In this case, the first volume compensation unit 12 comprises a rigid tank 14 enclosing a flexible body 15, which may be a rubber bladder. The space between the flexible body 15 and an inner surface of the rigid tank 14 defines a first space 16 of an adjustable volume for accommodation of the working fluid. The volume of the first space 16 depends on the pressure in an air space 17a, which is defined by the flexible body 15. A schematically indicated air-regulating device 17 is used to regulate the air pressure in the air space 17a.

Furthermore, an outer surface of the compensation tank 12 has been provided with cooling fins 14a. The cooling fins 14a increase the heat transfer surface between the working fluid in the inner space 16 of the compensation tank 12 and ambient air. Such a design makes it possible to increase the cooling of the working fluid in the inner space 16 of the compensation tank 12. In order to further increase the heat transfer between the working fluid in the inner space 16 of the compensation tank 12 and ambient air, an air fan 29 is arranged to provide a cooling air flow towards an area of the outer surface of the compensation tank including the cooling fins 14a. The air fan is driven by an electric motor 30. Otherwise, the embodiment shown in Fig. 3 includes the same components as the example in Fig. 2.

Before a start of the WHR system, all working fluid is in liquid state. During a start-up phase, it is a very large volume expansion of the working fluid in the main circuit 4 due to the fact that the working fluid starts to evaporate in the evaporator 5. This large volume expansion results in a large accumulation of working fluid in the compensation tank 12. During a following regular operating phase of the WHR system, a reduced amount of working fluid is circulated in the main circuit 4. During the regular operating phase of the WHR system, the first valve member 19a is in a closed position and the intermittent valve member 20 is in an open position. Thus, the working fluid in the main circuit 4 is in fluid contact with the working fluid in the inner space 16 of the compensation tank 12 via the second connection line 18b. During the regular operating phase, it is usually possible to maintain a desired condensation temperature in the WHR system with relatively small volume fluctuations of the working fluid. Thus, it is relatively small exchange of working fluid between the compensation tank 12 and the main circuit 4. During the regular operating phase, the control unit 26 determines a desired condensation pressure at which the WHR system has an optimal efficiency. The control unit 26 receives information about the actual condensation pressure from a not indicated sensor. In case there is a difference between the desired condensation pressure and the actual condensation pressure, the control unit 26 activates the actuator 25 such that it provides a movement of the piston 23 which adjusts the volume of the space 24 in a manner such that this pressure difference is eliminated.

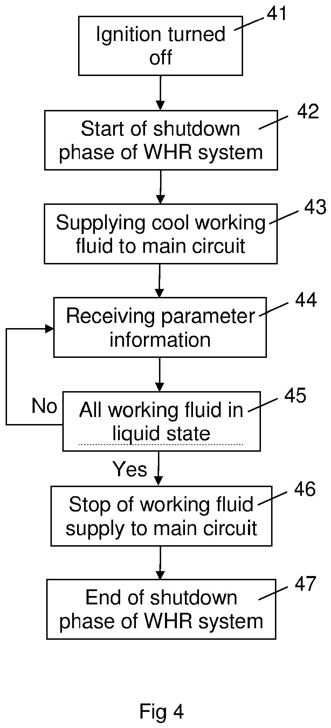

Fig. 4 shows a flow chart illustrating a method for a shutdown phase of the WHR system. At step 41, a driver 1 turns off the ignition in the vehicle 1 such that the combustion engine 2 is turned off and the exhaust flow through the exhaust line 6 ceases. The control unit 26 receives information from the ignition system 28 that the ignition has been turned off which means that a shutdown phase of the WHR system is to be started. The start of the shutdown phase is provided at step 42. At step 43, the control unit 29 initiates supply of cool working fluid from the compensation tank 12 to the main circuit 4. This may be performed in different ways.

A first way to supply cool to the main circuit 4, it is to set the WHR system in an idle mode. In the idle mode the expander 7 is disconnected from the power train of the vehicle 1. Alternatively, the working fluid is directed past the expander 7 via a not indicated bypass line. However, in the idle mode, it is possible for the pump 3 to circulate the working fluid through the main circuit 4 with a relatively low flow resistance and with a relatively low consumption of electrical energy. In the example shown in Fig. 2, the control unit 26 initiates a movement of the first valve device 19a to an open position and a movement of the intermittent valve member 20 to a closed position during the shutdown phase of the WHR system. In the embodiment shown in Fig. 3, the control unit 26 initiates a movement of the first valve device 19a and the second valve 19b to an open position and a movement of the intermittent valve member 20 to a closed position during the shutdown phase of the WHR system. Such a positioning of the valve members 19a, 19b, 20 means that the circulating working fluid flow enters the compensation tank 12 via the first connection line 18a and leaves the compensation tank 12 via the second connection line 18b.

During the start-up phase of the WHR system, a relatively large quantity of working fluid is accumulated in the compensation tank 12. During the following regular operating phase, there is only a small working fluid exchange between the main circuit 4 and the second connection line 18b. The accumulated working fluid in the compensation tank 12 is substantially isolated from the working fluid circulating in the main circuit 4. During the regular operating phase, the accumulated working fluid in the compensation tank 12 is cooled by ambient air and the working fluid in the main circuit is heated by exhaust gases. Due to these facts, the working fluid in the compensation tank 12 usually has a considerably lower temperature than the working fluid in the main circuit 4. Consequently, the working fluid leaving the compensation tank 12 via the second connection line 18b during the shutdown phase of the WHR system has usually a significantly lower temperature than the working fluid entering the compensation tank 12 via the first connection line 18a. Thus, hot working fluid is replaced by cool working fluid in the main circuit 4 during the shutdown phase of the WHR system.

As a compliment to the circulation of the working fluid in the main circuit 4 during the shutdown phase, it is possible to provide different pressures in the compensation tank 12 and the main circuit 4. Such a measure may increase the exchange of working medium between the compensation tank 12 and the main circuit 4. The pressure in the compensation tank 12 can be varied by means of the air regulating device 17 and the pressure in the main circuit 4 can be varied by the pressure member 13. In the embodiment shown in Fig. 3, it is possible to supply working fluid from the compensation tank 12 to the main circuit 4 by setting the first valve member 19a and the intermittent valve body 20 in a closed position and the second valve member 19b in an open position. Thereafter, the air regulating device 17 increases the pressure in the compensation tank 12 to a higher level than the pressure in the main circuit 4. Alternatively or in combination, the pressure member 13 can decrease the pressure in the main circuit 4 in order to further increase the pressure difference between the compensation tank 12 and the main circuit 4. Such a pressure difference results in a cool working fluid flow from the compensation tank 12 to the main circuit 4.

When said pressure difference has been eliminated and the supply of cool working fluid to the main circuit has ceased, the control unit 26 opens the first valve member 19a and closes the second valve member 19b. The intermittent valve member 20 is maintained in the closed position. Thereafter, the air regulating device 17 decreases the pressure in the compensation tank 12 to a lower level than the pressure in the main circuit 4. Alternatively or in combination, the pressure member 13 increase the pressure in the main circuit 4. This pressure difference results in a hot working fluid flow from the main circuit 4 to the compensation tank 12 via the first connection line 18a. Also in this case, it is possible to replace hot working fluid in the main circuit 4 with cool working fluid from the compensation tank 12.

At step 44, the control unit 26 receives information from the sensor about the pressure and the temperature of the working fluid in said position adjacent to the expander. In view of this information, the control unit 26 determines if the working fluid is in liquid or gaseous state in this position of the main circuit 4. During the regular operating phase, the working fluid is in gaseous state and it has its highest temperature in the second part 4b of the main circuit 4. During a following shutdown phase of the WHR system, it is a risk that isolated spaces with gaseous working fluid are created adjacent to the expander 7. In case the control unit 26 determines that the working fluid is in liquid state in this position of the main circuit 4, it is very likely that all working fluid in the main circuit 4 is in liquid state. When the control unit 26 receives information from said sensor 27 indicating that all working fluid in the main circuit 4 is in liquid state, it ends the supply of cool working fluid from the compensation tank 12 to the main circuit 4.

When all working fluid is in liquid state in the main circuit 4, the control unit 26 may activate the pressure member 12, at step 45, such that it increases the pressure in the main circuit 4 in order to ensure that a further cooling of the working fluid in the main circuit do not results in a pressure drop to a lower pressure than ambient air pressure. The shutdown phase of the WHR system ends at step 46. In view of said active cooling of the working fluid in the main circuit 4, it is possible to perform a very fast shutdown phase of the WHR system.

## Claims

1. An arrangement for controlling a shutdown phase of a WHR-system, wherein the WHR-system comprises a main circuit (4) which comprises a pump (3), an evaporator (5), an expander (7) and a condenser (10), and a compensation tank (12) which is configured to compensate for volume changes of a working fluid in the main circuit (4) during operation of the WHR-system, wherein the arrangement comprises a control unit (26) configured to receive information when the shutdown phase of the WHR-system is to be initiated and flow means able to supply working fluid from the compensation tank (12) to the main circuit (4), and that the control unit (26) is configured to activate said flow means such that working fluid is supplied from the compensation tank (12) to the main circuit (4) when it receives information indicating that the shutdown phase of the WHR-system is to be initiated, wherein said flow means comprises a flow member (3) arranged to circulate the working fluid in the main circuit during at least a part of the shutdown phase, and wherein the flow member (3) is the pump (3) in the WHR-system, **characterized in that** said flow means comprises a first connection line (18a) and a second connection line (18b) connecting the compensation tank (12) and the main circuit, a first valve member (19a) configured to direct working fluid from the main circuit (4) to the compensation tank (12) via the first connection line (18a) and a second valve member (19b) configured to direct working fluid from the compensation tank (12) to the main circuit (4) via the second connection line (18b).

2. An arrangement according to claim 1, wherein said flow means comprises a pressure member (17a, 22) configured to provide a pressure difference between the working fluid in the compensation tank (12) and the working fluid in the main circuit (4) during at least a part of the shutdown phase.

3. An arrangement according to claim 2, wherein said pressure member (17a) is arranged to change the pressure in the compensation tank (12).

4. An arrangement according to claim 2, wherein said pressure member (22) is arranged to change the pressure in the main circuit (4).

5. An arrangement according to any one of the preceding claims, wherein the control unit (26) is configured to receive information indicating when all working fluid in the main circuit (4) is in liquid state.

6. An arrangement according to claim 5, wherein the control unit (26) is configured to receive information about the temperature and the pressure of the working fluid in a position adjacent to the expander (7).

7. An arrangement according to any one of the preceding claims, wherein the arrangement comprises cooling means (14a, 29) arranged to cool the working liquid in the compensation tank (12).

8. An arrangement according to claim 7, wherein said cooling means comprises cooling fins (14a) arranged on an outer surface of the compensation tank.

9. A method for controlling a shutdown phase of a WHR-system, wherein the WHR-system comprises a main circuit (4) which comprises a pump (3), an evaporator (5), an expander (7) and a condenser (10), and a compensation tank (12) which is configured to compensate for volume changes of a working fluid in the main circuit (4) during operation of the WHR-system, the method **characterized by** the steps:
to receive information when the shutdown phase of the WHR-system is to be initiated,
to supply working fluid from the compensation tank (12) to the main circuit (4) when it receives information indicating that the shutdown phase of the WHR-system is to be initiated,
to circulate the working fluid through the main circuit (4) by a flow member (3) during at least a part of the shutdown phase, wherein the flow member (3) is the pump (3) in the WHR-system, and
to supply working fluid from the main circuit (4) to the compensation tank via a first connection line (18a) and from the compensation tank (12) to the main circuit (4) via a second connection line (18b).

10. A method according to claim 9, wherein it further comprises the step to create a pressure difference between the working fluid in the compensation tank (12) the working fluid in the main circuit (4) during at least a part of the shutdown phase.

11. A method according to claim 10, wherein it further comprises the step to change the pressure in the compensation tank (12).

12. A method according to claim 10, wherein it further comprises the step to change the pressure in the main circuit (4).

13. A method according to any one of the preceding claims 9-12, wherein it further comprises the step to receive information indicating when all working fluid in the main circuit (4) is in liquid state.

14. A method according to claim 13, wherein it further comprises the step to receive information about the temperature and the pressure of the working fluid in a position adjacent to the expander (7).

15. A method according to any one of the preceding claims 9-14, wherein it further comprises the step to cool of the working liquid in the compensation tank (12).

16. A WHR-system, wherein it comprises an arrangement according to any of the preceding claims 1-8.

## Patentansprüche

1. Anordnung zur Steuerung einer Abschaltphase eines WHR-Systems, wobei das WHR-System einen Hauptkreislauf (4) mit einer Pumpe (3), einem Verdampfer (5), einem Expander (7) und einem Kondensator (10) und einen Ausgleichsbehälter (12) umfasst, der dazu eingerichtet ist, Volumenänderungen eines Arbeitsfluids in dem Hauptkreislauf (4) während eines Betriebs des WHR-Systems zu kompensieren, wobei die Anordnung eine Steuereinheit (26), die dazu eingerichtet ist, Informationen zu empfangen, wenn die Abschaltphase des WHR-Systems eingeleitet werden soll, und eine Strömungseinrichtung umfasst, die in der Lage ist, Arbeitsfluid aus dem Ausgleichsbehälter (12) in den Hauptkreislauf (4) zu liefern, und wobei die Steuereinheit (26) dazu eingerichtet ist, die Strömungseinrichtung zu aktivieren, so dass Arbeitsfluid aus dem Ausgleichsbehälter (12) in den Hauptkreislauf (4) geliefert wird, wenn sie Informationen empfängt, die anzeigen, dass die Abschaltphase des WHR-Systems eingeleitet werden soll, wobei die Strömungseinrichtung ein Strömungsbauteil (3) umfasst, das dazu eingerichtet ist, das Arbeitsfluid im Hauptkreislauf während zumindest eines Teils der Abschaltphase zu zirkulieren, und wobei das Strömungsbauteil (3) die Pumpe (3) in dem WHR-System ist, **dadurch gekennzeichnet, dass** die Strömungseinrichtung eine erste Verbindungsleitung (18a) und eine zweite Verbindungsleitung (18b), die den Ausgleichsbehälter (12) und den Hauptkreislauf verbinden, ein erstes Ventilelement (19a), das dazu eingerichtet ist, Arbeitsflüssigkeit aus dem Hauptkreislauf (4) über die erste Verbindungsleitung (18a) zum Ausgleichsbehälter (12) zu leiten, und ein zweites Ventilelement (19b) umfasst, das dazu eingerichtet ist, Arbeitsflüssigkeit aus dem Ausgleichsbehälter (12) über die zweite Verbindungsleitung (18b) zum Hauptkreislauf (4) zu leiten.

2. Anordnung nach Anspruch 1, wobei die Strömungseinrichtung ein Druckelement (17a, 22) umfasst, das dazu eingerichtet ist, eine Druckdifferenz zwischen dem Arbeitsfluid in dem Ausgleichsbehälter (12) und dem Arbeitsfluid in dem Hauptkreislauf (4) während zumindest eines Teils der Abschaltphase bereitzustellen.

3. Anordnung nach Anspruch 2, wobei das Druckelement (17a) dazu eingerichtet ist, den Druck im Ausgleichsbehälter (12) zu verändern.

4. Anordnung nach Anspruch 2, wobei das Druckelement (22) dazu eingerichtet ist, den Druck im Hauptkreislauf (4) zu ändern.

5. Anordnung nach einem der vorhergehenden Ansprüche, wobei die Steuereinheit (26) dazu eingerichtet ist, Informationen zu empfangen, die anzeigen, wenn sich das gesamte Arbeitsfluid im Hauptkreislauf (4) in flüssigem Zustand befindet.

6. Anordnung nach Anspruch 5, bei der die Steuereinheit (26) dazu eingerichtet ist, Informationen über die Temperatur und den Druck des Arbeitsfluids an einer Stelle in der Nähe des Expanders (7) zu empfangen.

7. Anordnung nach einem der vorhergehenden Ansprüche, wobei die Anordnung eine Kühleinrichtung (14a, 29) umfasst, die dazu eingerichtet ist, die Arbeitsflüssigkeit in dem Ausgleichsbehälter (12) zu kühlen.

8. Anordnung nach Anspruch 7, wobei die Kühleinrichtung Kühlrippen (14a) umfasst, die an einer Außenfläche des Ausgleichsbehälters angeordnet sind.

9. Verfahren zum Steuern einer Abschaltphase eines WHR-Systems, wobei das WHR-System einen Hauptkreislauf (4) mit einer Pumpe (3), einem Verdampfer (5), einem Expander (7) und einem Kondensator (10) und einen Ausgleichsbehälter (12) umfasst, der dazu eingerichtet ist, Volumenänderungen eines Arbeitsfluids im Hauptkreislauf (4) während eines Betriebs des WHR-Systems zu kompensieren, wobei das Verfahren **gekennzeichnet ist durch** die Schritte:
Empfangen von Informationen, wenn die Abschaltphase des WHR-Systems eingeleitet werden soll,
Zuführen von Arbeitsflüssigkeit aus dem Ausgleichsbehälter (12) in den Hauptkreislauf (4), wenn er Informationen empfängt, die anzeigen, dass die Abschaltphase des WHR-Systems eingeleitet werden soll,
Zirkulieren lassen des Arbeitsfluids durch den Hauptkreislauf (4) mittels eines Strömungsbauteils (3) während zumindest eines Teils der Abschaltphase, wobei das Strömungsbauteil (3) die Pumpe (3) in dem WHR-System ist, und
Leiten von Arbeitsfluid aus dem Hauptkreislauf (4) über eine erste Verbindungsleitung (18a) zum Ausgleichsbehälter und aus dem Ausgleichsbehälter (12) über eine zweite Verbindungsleitung (18b) zum Hauptkreislauf (4).

10. Verfahren nach Anspruch 9, das ferner den Schritt umfasst, eine Druckdifferenz zwischen dem Arbeitsfluid im Ausgleichsbehälter (12) und dem Arbeitsfluid im Hauptkreislauf (4) während zumindest eines Teils der Abschaltphase zu erzeugen.

11. Verfahren nach Anspruch 10, das ferner den Schritt umfasst, den Druck in dem Ausgleichsbehälter (12) zu ändern.

12. Verfahren nach Anspruch 10, das ferner den Schritt umfasst, den Druck im Hauptkreislauf (4) zu ändern.

13. Verfahren nach einem der vorhergehenden Ansprüche 9 bis 12, das ferner den Schritt umfasst, Informationen zu empfangen, die anzeigen, wenn sich das gesamte Arbeitsfluid im Hauptkreislauf (4) in flüssigem Zustand befindet.

14. Verfahren nach Anspruch 13, das ferner den Schritt des Empfangens von Informationen über die Temperatur und den Druck des Arbeitsfluids an einer Stelle in der Nähe des Expanders (7) umfasst.

15. Verfahren nach einem der vorhergehenden Ansprüche 9 bis 14, das ferner den Schritt des Abkühlens der Arbeitsflüssigkeit im Ausgleichsbehälter (12) umfasst.

16. WHR-System, das eine Anordnung nach einem der vorangehenden Ansprüche 1 bis 8 umfasst.

## Revendications

1. Agencement pour commander une phase d'arrêt d'un système WHR, dans lequel le système WHR comprend un circuit principal (4) qui comprend une pompe (3), un évaporateur (5), un détendeur (7) et un condenseur (10), et un réservoir de compensation (12) qui est configuré pour compenser les changements de volume d'un fluide de travail dans le circuit principal (4) pendant le fonctionnement du système WHR, dans lequel l'agencement comprend une unité de commande (26) configurée pour recevoir des informations lorsque la phase d'arrêt du système WHR doit être initiée et un moyen d'écoulement capable de fournir du fluide de travail depuis le réservoir de compensation (12) au circuit principal (4), et que l'unité de commande (26) est configurée pour activer lesdits moyens d'écoulement de telle sorte que le fluide de travail est fourni depuis le réservoir de compensation (12) au circuit principal (4) lorsqu'il reçoit des informations indiquant que la phase d'arrêt du système WHR doit être initiée, dans lequel ledit moyen d'écoulement comprend un élément d'écoulement (3) agencé pour faire circuler le fluide de travail dans le circuit principal pendant au moins une partie de la phase d'arrêt, et dans lequel l'élément d'écoulement (3) est la pompe (3) dans le système WHR, **caractérisé en ce que** ledit moyen d'écoulement comprend une première ligne de connexion (18a) et une seconde ligne de connexion (18b) reliant le réservoir de compensation (12) et le circuit principal, un premier élément de vanne (19a) configuré pour diriger le fluide de travail du circuit principal (4) vers le réservoir de compensation (12) via la première ligne de connexion (18a) et un second élément de soupape (19b) configuré pour diriger le fluide de travail du réservoir de compensation (12) vers le circuit principal (4) via la seconde ligne de connexion (18b).

2. Agencement selon la revendication 1, dans lequel ledit moyen d'écoulement comprend un élément de pression (17a, 22) configuré pour fournir une différence de pression entre le fluide de travail dans le réservoir de compensation (12) et le fluide de travail dans le circuit principal (4) pendant l'au moins une partie de la phase d'arrêt.

3. Agencement selon la revendication 2, dans lequel ledit élément de pression (17a) est agencé pour changer la pression dans le réservoir de compensation (12).

4. Agencement selon la revendication 2, dans lequel ledit élément de pression est agencé pour changer la pression dans le circuit principal (4).

5. Agencement selon l'une quelconque des revendications précédentes, dans lequel l'unité de commande (26) est configurée pour recevoir des informations indiquant quand tout le fluide de travail dans le circuit principal (4) est à l'état liquide.

6. Agencement selon la revendication 5, dans lequel l'unité de commande (26) est configurée pour recevoir des informations sur la température et la pression du fluide de travail dans une position adjacente au détendeur (7).

7. Agencement selon l'une quelconque des revendications précédentes, dans lequel l'agencement comprend des moyens de refroidissement (14a, 29) agencés pour refroidir le liquide de travail dans le réservoir de compensation (12).

8. Agencement selon la revendication 7, dans lequel ledit moyen de refroidissement comprend des ailettes de refroidissement (14a) agencées sur une surface extérieure du réservoir de compensation.

9. Procédé de commande d'une phase d'arrêt d'un système WHR, dans lequel le système WHR comprend un circuit principal (4) qui comprend une pompe (3), un évaporateur (5), un détendeur (7) et un condenseur (10), et un réservoir de compensation (12) qui est configuré pour compenser les changements de volume d'un fluide de travail dans le circuit principal (4) pendant le fonctionnement du système WHR, le procédé étant **caractérisé par** les étapes suivantes :
recevoir des informations lorsque la phase d'arrêt du système WHR doit être initiée, pour fournir du fluide de travail depuis le réservoir de compensation (12) au circuit principal (4) lorsqu'il reçoit des informations indiquant que la phase d'arrêt du système WHR doit être initiée,
faire circuler le fluide de travail à travers le circuit principal (4) par un élément d'écoulement (3) pendant au moins une partie de la phase d'arrêt, dans lequel l'élément d'écoulement (3) est la pompe (3) dans le système WHR, et
fournir du fluide de travail du circuit principal (4) au réservoir de compensation via une première ligne de connexion (18a) et du réservoir de compensation (12) au circuit principal (4) via une seconde ligne de connexion (18b).

10. Procédé selon la revendication 9, comprenant en outre l'étape consistant à créer une différence de pression entre le fluide de travail dans le réservoir de compensation (12) et le fluide de travail dans le circuit principal (4) pendant l'au moins une partie de la phase d'arrêt.

11. Procédé selon la revendication 10, comprenant en outre l'étape consistant à modifier la pression dans le réservoir de compensation (12) .

12. Procédé selon la revendication 10, comprenant en outre l'étape consistant à modifier la pression dans le circuit principal (4).

13. Procédé selon l'une quelconque des revendications précédentes 9 à 12, comprenant en outre l'étape consistant à recevoir des informations indiquant quand tout le fluide de travail dans le circuit principal (4) est à l'état liquide.

14. Procédé selon la revendication 13, comprenant en outre l'étape consistant à recevoir des informations sur la température et la pression du fluide de travail dans une position adjacente au détendeur (7).

15. Procédé selon l'une quelconque des revendications précédentes 9 à 14, comprenant en outre l'étape consistant à refroidir le liquide de travail dans le réservoir de compensation (12).

16. Système WHR, comprenant un agencement selon l'une quelconque des revendications précédentes 1 à 8.
